# EUROPÄISCHE PATENTSCHRIFT

(11) **EP 1 013 325 B1**
(45) Veröffentlichungstag und Bekanntmachung des Hinweises auf die Patenterteilung: **04.06.2003**
(21) Anmeldenummer: 99811076.1
(22) Anmeldetag: 23.11.1999
(51) Int. Cl.: B01D 3/00, B01J 8/04, B01J 8/06, B01J 19/32

(54) **Reaktivdestillation**
Reactive distillation
Distillation réactive

(30) Priorität: 22.12.1998 EP 98811254
(43) Veröffentlichungstag der Anmeldung: 28.06.2000
(73) Patentinhaber: Sulzer Chemtech AG, 8404 Winterthur (CH)
(72) Erfinder: Moritz, Peter, 8400 Winterthur (CH); Levering, Willem Wiekert, 8405 Winterthur (CH); Plüss, Raymond Charles, 8451 Kleinandelfingen (CH)
(74) Vertreter: Sulzer Management AG

(56) Entgegenhaltungen:
- EP-A- 0 466 954
- EP-A- 0 631 813
- EP-A- 0 640 385
- WO-A-90/02603
- WO-A-98/12281

## Beschreibung

Die Erfindung betrifft eine Reaktivdestillation gemäss Oberbegriff von Anspruch 1 und Anwendungen der Reaktivdistillation. Ein Solche Reaktivdestillation ist aus der WO 90/02603 bekannt.

Unter Reaktivdestillation wird ein Verfahren verstanden, bei dem katalytische Reaktionen in einer Kolonne unter simultaner Destillation durchgeführt werden. Die Kolonne kann dabei als Packungskolonne betrieben werden. Die Packung der Kolonne umfasst typischerweise eine Vielzahl von Feststoffe enthaltende Teilräume und Hohlräume zwischen den Teilräumen, wobei die Hohlräume und Teilräume sich weitgehend längs einer Kolonnenachse oder in Winkeln zu dieser erstrecken und die Teilräume jeweils durch ein Festbett gebildet sind, das katalytisch wirksame Stoffe enthält. Ein dichteres Fluid fliesst in den Festbett-Teilräumen mit einem Volumenstrom, der als interner Volumenstrom bezeichnet wird. Ein weniger dichtes Fluid strömt im Gegenstrom durch die Hohlräume. Die Festbett-Teilräume sind durch Wände begrenzt, die für die Fluide durchlässig sind. Es finden einerseits katalytische Reaktionen im Festbett und andererseits Stoffaustausch zwischen den beiden Fluiden statt.

Bei der Reaktivdestillation entstehen unerwünschte Nebenprodukte, deren Konzentrationen von den Betriebsparametern abhängen. Es ist in der Regel eine Aufbereitung des Produkts erforderlich, die um so aufwendiger ist, je mehr Nebenprodukte entstanden sind. Die Betriebsparameter werden daher mit Vorteil so gewählt, dass eine Nebenprodukterzeugung möglichst klein ausfällt. Es wird allerdings auch eine möglichst grosse Produktionsrate der durchzuführenden Reaktivdestillation pro Volumeneinheit der Packung angestrebt. Um dies zu erreichen, muss dafür gesorgt werden, dass die gesamte Packungsoberfläche, die potentiell für die Reaktion zur Verfügung steht, durch das dichtere Fluid bedeckt (benetzt) ist. Aus der US-A 5 120 403 ist eine Reaktivdestillation bekannt, bei der die Packung mit einer flüssigen Phase "geflutet" ist und eine Gasphase mit der Flüssigphase einen Schaum bildet, der durch die Packung transportiert wird.

Aufgabe der Erfindung ist es, ein Verfahren zur Durchführung einer Reaktivdestillation zu schaffen, für das die Erzeugung von Nebenprodukten minimal ist oder zumindest nahe bei einem möglichen Minimum liegt und für das die Produktionsrate der zu erzeugenden Produkte möglichst gross ist. Diese Aufgabe wird durch die im Anspruch 1 definierte Reaktivdestillation gelöst.

Die abhängigen Ansprüche betreffen vorteilhafte Ausführungsformen der Erfindung. Gegenstand des Anspruchs 7-9 ist eine Anwendung des erfindungsgemässen Verfahrens.

Nachfolgend wird die Erfindung anhand der Zeichnungen erläutert. Es zeigen:
- Fig. 1: den unteren Teil einer Kolonne, mit der eine Reaktivdestillation durchführbar ist,
- Fig. 2: ausschnittsweise eine Packung zur Durchführung der Reaktivdestillation,
- Fig. 3: ein Diagramm zur Erläuterung einer Verweilzeitsverteilung,
- Fig. 4: eine experimentell bestimmte Kurve, welche die Abhängigkeit der Varianz der Verweilzeitsverteilung von dem internen Volumenstrom darstellt,
- Fig. 5: Wandpartien eines kissenartigen Packungsteils,
- Fig. 6: eine Trägerstruktur mit einem zylinderförmigen Packungsteil und
- Fig. 7: ausschnittsweise eine Packung mit zwei Arten von Packungsstrukturen.

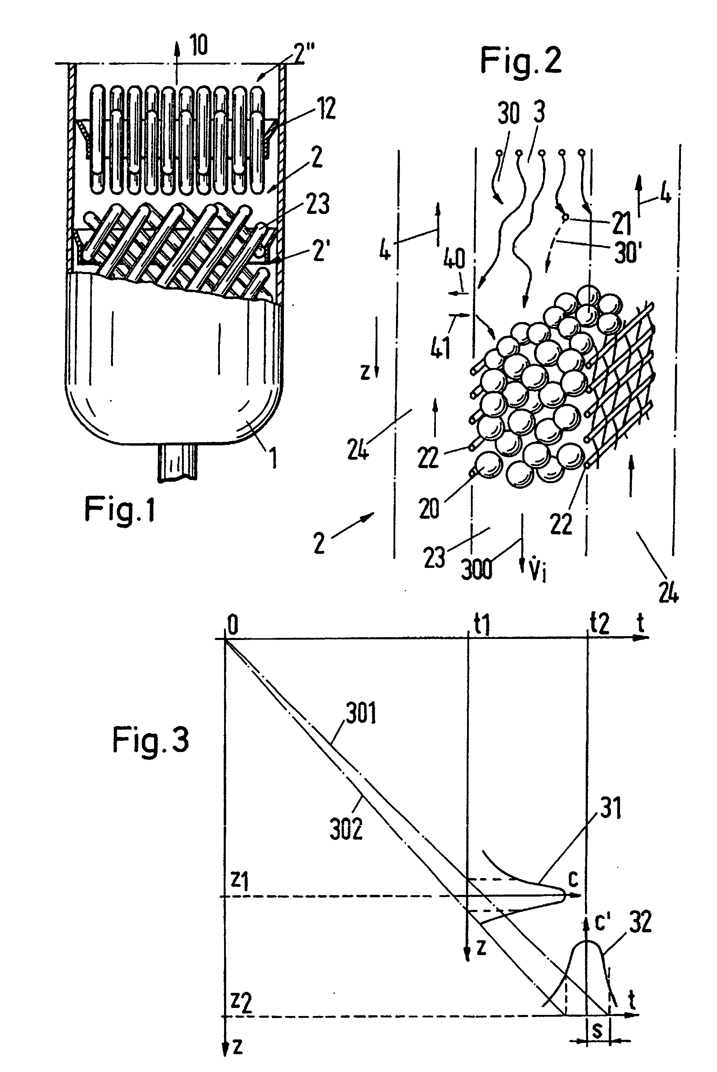

Die Kolonne 1 der Fig. 1 enthält eine Packung 2, wie sie aus der Patentschrift EP 0 640 385 bekannt ist. Die Packung 2 umfasst stapelartig angeordnete Packungselemente 2', die aus längs einer Hauptströmungsrichtung 10 ausgerichteten Lagen 2" aufgebaut sind, wobei die Lagen 2" aus im wesentlichen zylinderförmigen Packungsteilen 23 gebildet sind. Zwischen den Packungsteilen 23 befinden sich Strömungskanäle, die sich kreuzen und gegeneinander offen sind. Die Packungsteile 23 sind in eine gitterartige Trägerstruktur eingelegt, die in Fig. 1 nicht dargestellt ist. Benachbarte Packungselemente 2' sind jeweils um einen Winkel von 90° gegeneinander versetzt. Krägen 12 bilden umlenkende Hindernisse für die an der Reaktivdestillation beteiligten Fluide 3 und 4 (siehe Fig. 2).

Anhand der Figuren 2 und 3 werden nun Aspekte der Reaktivdestillation erläutert, die für die Erklärung der Erfindung benötigt werden. Die Fluide 3 und 4, die zwei Phasen unterschiedlicher Dichten bilden, durchströmen die Packung 2 im Gegenstrom in Richtung der z-Achse, die parallel zu einer Kolonnenachse ist. Die Packung 2 umfasst Hohlräume 24 sowie Teilräume 23, die sich weitgehend längs der Kolonnenachse erstrecken oder die auch in Winkeln zur Kolonnenachse ausgerichtet sein können. Die Teilräume 23 bilden jeweils ein Festbett 20, insbesondere ein Schüttkörper aus einem Granulat, das ein Träger von katalytisch wirksamen Stoffen ist. Die Teilräume 23 sind durch Wände 22 begrenzt, die für die Fluide 3, 4 durchlässig sind. Diese Wände 22 können beispielsweise aus Drahtgittern (in Form von Geweben, Geflechten oder Gewirken) hergestellt sein.

Das Fluid 3 fliesst mit einem internen Volumenstrom 300 durch das Festbett 22. Pfeile 30 deuten Wege an, auf denen sich Moleküle der im Fluid 3 enthaltenen Stoffe bewegen. Durch Reaktionen an Stellen 21 (innerhalb des Festbetts 20) werden Ausgangsstoffe in gewünschte Produkte oder unerwünschte Nebenprodukte (Pfeil 30') umgesetzt. An der durch die Wände 22 gebildeten Oberflächen des Festbetts 20 findet ein Stoffaustausch (Pfeile 40, 41) zwischen den Fluiden 3 und 4 statt. Mittels diesem Stoffaustausch lässt sich eine Destillation ausführen.

Die im Fluid 3 enthaltenen Moleküle haben verschiedene Verweilzeiten im Festbett 20. Ein beim Punkt z = 0 und zum Zeitpunkt t = 0 in das Festbett 20 eingebrachtes Molekül - siehe Diagramm der Fig. 3 - befindet sich zu einem späteren Zeitpunkt t = t₁ in der Umgebung eines Punkts mit z = z₁. Die beiden strichpunktierten Linien 301 und 302 geben einen Streubereich der Wege an, auf denen sich die Moleküle durch das Festbett 20 bewegen. Eine Häufigkeitsverteilung der Aufenthaltsorte z der Moleküle zum Zeitpunkt t = t₁ ist durch eine Glockenkurve 31 gegeben, die qualitativ als Funktionskurve c = c(z; t = t₁) dargestellt ist. Registiert man am unteren Ende des Festbetts 20 nämlich bei z = z₂ - den Austritt von markierten Molekülen, die alle gleichzeitig zum Zeitpunkt t = 0 in das Festbett 20 eingebracht worden sind, so erhält man eine Giockenkurve 32: c' = c'(t; z = z₂). Für diese Kurve 32 lässt sich eine Varianz s bestimmen. Diese Varianz s hängt vom internen Volumenstrom 300 ab. Die markierten Moleküle können beispielsweise Ionen sein, deren Konzentration am Festbettende z = z₂ aufgrund von Messungen der elektrischen Leitfähigkeit bestimmt werden können.

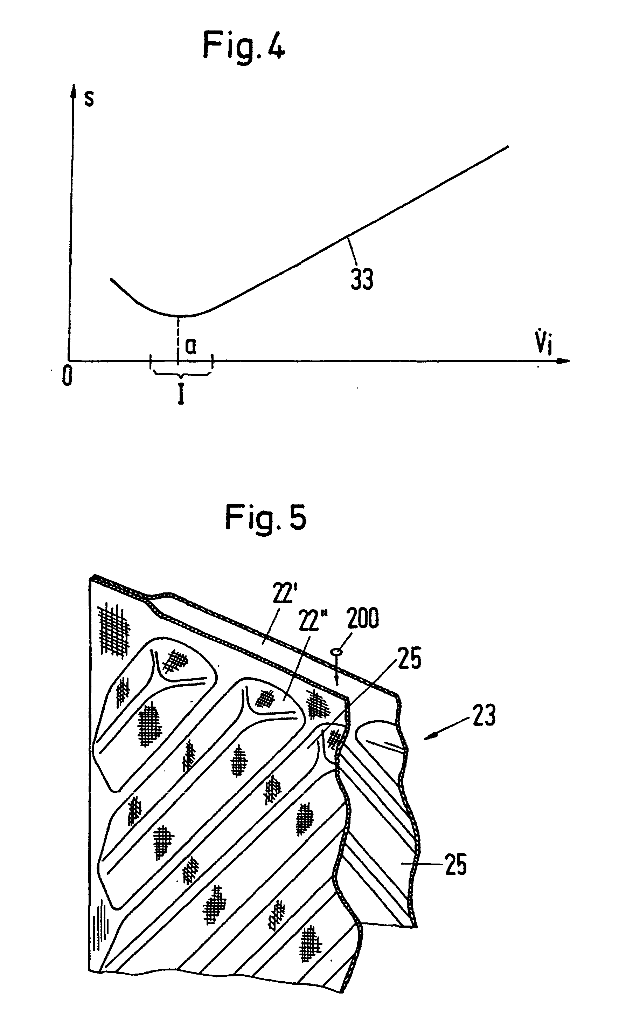

Messungen der Varianz s in Abhängigkeit von dem internen Volumenstrom 300 ergeben eine Kurve 33, die ein Minimum aufweist: siehe Fig. 4. Dem Minimum von s entspricht ein ausgezeichneter Wert a des internen Volumenstroms, bei dem die erzeugte Menge an Nebenprodukten ebenfalls minimal ist. Bei einem viel kleineren internen Volumenstrom als a kommt es im Festbett 20 zu einer Stagnation des Fluids 3 und damit zu partiell höheren Verweilzeiten, was eine Verbreiterung der Kurve 32 und damit eine Erhöhung der Varianz s zur Folge hat. Bei einem viel grösseren internen Volumenstrom als a tritt an der durch die Wände 22 gebildeten Oberfläche des Festbetts 20 ein Flüssigkeits-Bypass auf. Diese Flüssigkeit fliesst an dem katalytisch wirksamen Festbett 20 vorbei und kommt mit ihm nur wenig in Kontakt. Das Fluid 3 hat partiell höhere Verweilzeiten, was ebenfalls zu einer Verbreiterung der Kurve 32 und einer Erhöhung der Varianz s führt.

Für eine vorgegebene Produktionsrate der durchzuführenden Reaktivdestillation ergibt sich ein optimales Verfahren, wenn die Kolonne so bemessen wird, dass der interne Volumenstrom den ausgezeichneten Wert a annimmt. Abweichungen von diesem Wert a, die in einem beschränkten Intervall I um den Wert a liegen, ergeben keine wesentliche Verschlechterung des Verfahrens: An den Grenzen dieses Intervalls I darf sich der interne Volumenstrom von dem ausgezeichneten Wert a bis um rund 30% unterscheiden. Vorzuziehen ist selbstverständlich, dass der Unterschied 10% oder weniger beträgt.

Aus der Patentschrift EP 0 631 813 ist eine weitere geeignete Packung zur Durchführung der Reaktivdestillation bekannt. Packungsteile 23, die parallele Lage bilden, sind kissenartig ausgebildet und umfassen zwei fluiddurchlässige Wände 22' und 22": siehe Fig. 5. Der Innenraum des Packungsteils 23 enthält ein Granulat 200 mit katalytisch wirksamen Stoffen. Parallele Kanäle 25 in den reliefartig profilierten Wänden 22' und 22" bilden den Innenraum. Diese Kanäle 25 kreuzen sich und sind gegeneinander offen. Am Rand des Packungsteils 23 sind sie abgeschlossen. Aufgrund der Profilierung der Wände 22' und 22" ergeben sich auch zwischen benachbarten Lagen jeweils kanalartige Hohlräume, die sich kreuzen und gegeneinander offen sind.

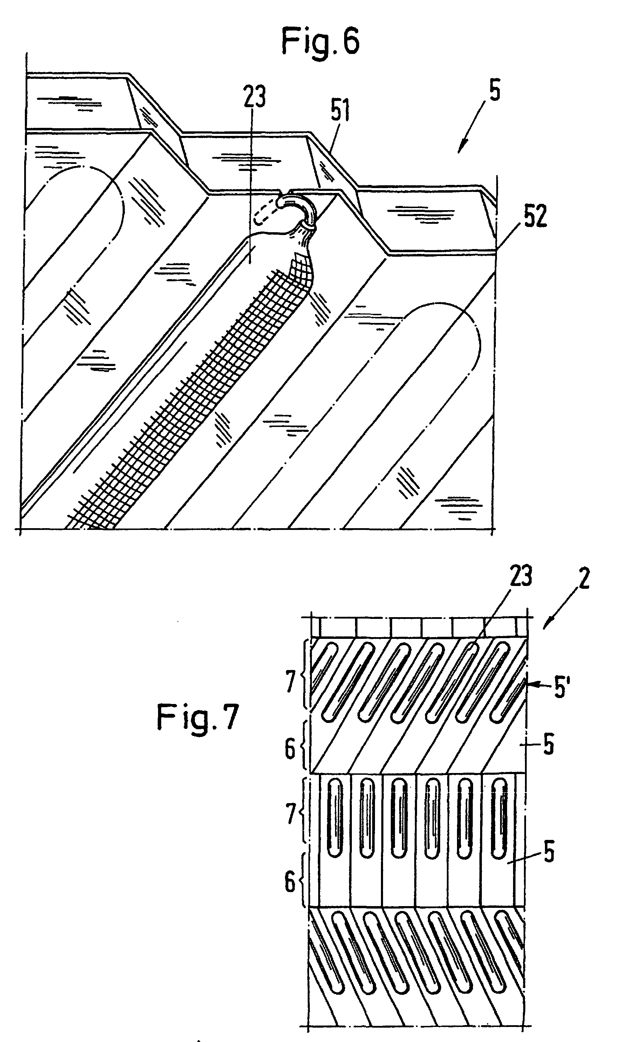

Fig. 6 zeigt eine weitere geeignete Packung, die aus der bereits genannten EP 0 640 385 bekannt ist. Eine statische Mischerstruktur 5 aus zickzackartig gefalteten Flächen 51 und 52 wird als Trägerstruktur für die Packungsteile 23 verwendet. Alle oder auch nur einzelne der durch die Zickzackfaltung gegebenen Kanäle können jeweils einen Packungsteil 23 enthalten. Auf der Trägerstruktur 5 bildet sich in der Regel auch ein Film des dichteren Fluids aus. Dadurch wird die für die Destillation zur Verfügung stehende Fläche vergrössert.

Um für die Destillation noch grössere Flächen zur Verfügung zu stellen, kann die Packung 2 folgendermassen ausgestaltet werden: siehe Fig. 7. In der Kolonne werden Zonen 6 und 7 einer ersten und einer zweiten Art in einer alternierenden Abfolge in Richtung der Kolonnenachse angeordnet. In den Zonen 6 der ersten Art sind Packungsstrukturen 5 (vgl. Fig. 6) enthalten, in denen lediglich ein Stoffaustausch zwischen den beiden Fluiden stattfindet. In den Zonen 7 der zweiten Art sind Packungsstrukturen 5', 23 enthalten, in denen die Reaktivdestillation abläuft. Die Längen der Zonen 6 und 7 können variirt werden, um unterschiedlich grosse Flächen zur Verfügung stellen zu können.

Für die Packungskolonne wird eine Produktionsmenge der Reaktivdestillation vorgegeben. Die Kapazität der Kolonnenpackung muss erfindungsgemäss so ausgelegt werden, dass der für den Betrieb der Kolonne vorgesehene interne Volumenstrom einerseits weitgehend der vorgegebenen Produktionsmenge entspricht und andererseits im genannten Intervall I um den ausgezeichneten Wert a liegt.

Die erfindungsgemässe Reaktivdestillation kann beispielsweise zur Herstellung oder zur Spaltung von Estem, Ethem und Alkoholen angewendet werden. Andere Anwendungen können selektive Hydrierungen von Olefinen oder Aromaten sein; ferner die Durchführung von Isomerisierungen.

Ein Beispiel zur Erläuterung der erfindungsgemässen Reaktivdestillation:

Die Synthese von Methyl-tert.-Butylether (MTBE) kann in einer Reaktivdestillation mit katalytisch wirksamen Packungen durchgeführt werden (vgl.WO 90/02603). Dabei wird Isobuten aus einem C4-Strom mit Methanol zu MTBE umgesetzt. Als Katalysator kann dabei saueres Inonenaustauscherharz verwendet werden. Neben der Hauptreaktion können hauptsächlich drei Nebenreaktionen auftreten. Zum einen kann der C4-Strom Spuren von Wasser enthalten, mit dem Isobuten zu tert.-Butanol reagiert. Zum anderen kann Isobuten mit sich selbst zu Diisobuten reagieren; ferner kann die Kondensation von Methanol zu Dimethylether stattfinden. Die beiden zuletzt genannten Nebenreaktionen treten bei grossem Überschuss eines Reaktionspartners oder bei Abwesenheit des anderen Reaktionspartners auf.

In einer Reaktivdestillation, die mit katalytisch wirksamen Packungen betrieben wird, kommt es bei einem kleinen internen Volumenstrom an verschiedenen Orten zu einer Stagnation der Flüssigphase und damit zu partiell höheren Verweilzeiten in der Reaktionzone der Kolonnne. In diesen stagnanten Zonen treten bei Überschuss eines Reaktionspartners oder bei reaktionsbedingter Abwesentheit des anderen Reaktionspartners die genannten Nebenreaktionen in erhöhtem Masse auf. Bei einem internen Volumenstrom, der die obere Grenze des Intervalls I überschreitet, werden stagnante Zonen zwar ebenfalls vermieden, jedoch geht der Reaktionsumsatz dabei erheblich zurück.

Bei der erfindungsgemässen Reaktivdestillation wird der interne Volumenstrom der Kolonne so eingestellt, dass der katalytisch wirksame Feststoff von der Flüssigphase gleichmässig durchströmt wird und stagnante Zonen im katalytisch wirksamen Festbett vermieden werden. Der Katalysator wird dadurch vollständig benetzt und die genannten Nebenreaktionen teilweise unterdrückt.

## Patentansprüche

1. Reaktivdestillation in einer Kolonne (1) mit einer zumindest teilweise als Katalysatorträger (23) ausgebildeten Packung (2), wobei unter Reaktivdestillation ein Verfahren verstanden wird, bei dem katalytische Reaktionen unter simultaner Destillation durchgeführt werden, die Packung eine Vielzahl von Feststoffe enthaltende Teilräume und Hohlräume zwischen den Teilräumen umfasst, die Hohlräume und Teilräume sich weitgehend längs einer Kolonnenachse oder in Winkeln zu dieser erstrecken, die genannten Teilräume jeweils durch ein Festbett gebildet sind, das katalytisch wirksame Stoffe enthält, wobei ferner zwei Phasen, nämlich Fluide (3, 4) mit unterschiedlichen Dichten, die Packung durchströmen, das erste, dichtere Fluid in den Festbett-Teilräumen mit einem Volumenstrom Vi (300), dem sogenannten internen Volumenstrom, fliesst, das zweite, weniger dichte Fluid im Gegenstrom durch die Hohlräume strömt und wobei einerseits katalytische Reaktionen im Festbett sowie andererseits Stoffaustausch zwischen den beiden Fluiden stattfinden,
**dadurch gekennzeichnet, dass** für den Volumenstrom Vᵢ des dichteren Fluids (3) ein Wert eingestellt wird, der sich in einem Intervall (I) um einen ausgezeichneten Wert a befindet, dass der Wert a einer Funktion des Volumenstroms Vᵢ zugeordnet und diese Funktion eine Verweilzeitsverteilung (32) des dichteren Fluids ist, dass die Varianz s der Verweilzeitsverteilung eine zweite Funktion des Volumenstroms Vᵢ in Form einer experimentell bestimmten Kurve ist, dass diese Funktion s(Vᵢ) für Vᵢ = a ein Minimum annimmt und dass an den Grenzen des genannten Intervalls der Volumenstrom Vᵢ sich von dem Wert a nicht um mehr als 30%, vorzugsweise 10% unterscheidet.

2. Reaktivdestillation nach Anspruch 1, **dadurch gekennzeichnet, dass** die Kolonne (1) eine Packung (2) enthält, die eine Vielzahl von Feststoffe enthaltende Teilräume (23) und Hohlräume (24) zwischen den genannten Teilräumen umfasst, wobei die Hohlräume sich weitgehend längs einer Kolonnenachse oder in Winkeln zu dieser erstrecken, die genannten Teilräume jeweils durch ein Festbett gebildet sind, das katalytisch wirksame Stoffe enthält und diese Festbett-Teilräume durch Wände (22) begrenzt sind, die für die Fluide (3, 4) durchlässig sind.

3. Reaktivdestillation nach Anspruch 2, **dadurch gekennzeichnet, dass** in der Kolonne (1) Zonen (6, 7) einer ersten und einer zweiten Art in einer alternierenden Abfolge in Richtung der Kolonnenachse angeordnet sind, wobei in den Zonen der ersten Art Packungsstrukturen (5) enthalten sind, in denen lediglich ein Stoffaustausch zwischen den beiden Fluiden stattfindet, während in den Zonen der zweiten Art Packungsstrukturen (5') enthalten sind, in denen die Reaktivdestillation durchgeführt wird.

4. Reaktivdestillation nach Anspruch 2 oder 3, **dadurch gekennzeichnet, dass** die Packung (2) oder die zur Durchführung der Reaktivdestillation vorgesehenen Packungsstrukturen (5') aus Lagen aufgebaut sind, die in Richtung der Kolonnenachse ausgerichtet sind, und dass benachbarte Lagen jeweils kanalartige Hohlräume bilden, die sich kreuzen und gegeneinander offen sind.

5. Reaktivdestillation nach Anspruch 4, **dadurch gekennzeichnet, dass** die Lagen jeweils durch eine Mehrzahl von katalytisch wirksame Stoffe enthaltenden Packungsteile (23) gebildet sind, die in eine Trägerstruktur (5) eingelegt sind, und dass die Packungsteile im wesentlichen zylinderförmig sind.

6. Reaktivdestillation nach Anspruch 4, **dadurch gekennzeichnet, dass** die Lagen jeweils durch kissenartige, zwei fluiddurchlässige Wände umfassende Packungsteile (23) gebildet sind und dass die Innenräume der Packungsteile durch parallele, katalytisch wirksame Stoffe (200) enthaltende Kanäle gebildet sind, die in Form einer reliefartigen Profilierung der Wände (25) vorliegen, wobei diese Kanäle sich kreuzen, gegeneinander offen sind und am Rand des Packungsteils abgeschlossen sind.

7. Anwendung der Reaktivdestillation gemäss einem der Ansprüche 1 bis 6 zur Herstellung oder zur Spaltung von Estem, Ethem oder Alkoholen.

8. Anwendung der Reaktivdestillation gemäss einem der Ansprüche 1 bis 6 zur selektiven Hydrierung von Olefinen oder Aromaten.

9. Anwendung der Reaktivdestillation gemäss einem der Ansprüche 1 bis 6 zur Durchführung von Isomerisierungen.

## Claims

1. Reactive distillation in a column (1) comprising a packing (2) which is at least partly designed as a catalyst carrier (23), wherein reactive distillation is understood to mean a method in which catalytic reactions are carried out with simultaneous distillation, the packing including a plurality of partial spaces containing solid substances and cavities between the partial spaces, the cavities and partial spaces extending along a column axis or at anlges to the same, the said partial spaces being each formed by a fixed bed which contains the catalytically active substance, wherein, furthermore, two phases, namely fluids (3, 4) of different densities flow through the packing, the first denser fluid flowing into the fixed bed with a volume flow Vᵢ (300), the so-called internal volume flow, the second less dense fluid flowing in counterflow through the cavities and wherein, on the one hand, catalytic reactions take place in the fixed bed and also, on the other hand, a material exchange takes place between the two fluids, **characterised in that**, for the volume flow Vᵢ of the denser fluid (3) a value is set which lies in an interval (I) about a meritorious value (a), that the value (a) is associated with a function of the volume flow V₁ this function is a dwell time distribution (32) of the denser fluid; **in that** the variance (s) of the dwell time distribution is a second function of the volume flow Vᵢ in the form of an experimentally determined curve, **in that** this function s(Vᵢ) adopts a minimum for Vᵢ = a; and **in that** at the limits of the said interval the volume flow Vᵢ does not differ from the value (a) by more than 30%, preferably 10%.

2. Reactive distillation in accordance with claim 1, **characterised in that** the column (1) contains a packing (2) which comprises many partial spaces (23) containing solid substances and cavities (24) between the named partial spaces, with the cavities extending largely along a column axis or at angles to the latter, with the named partial spaces in each case being formed by a fixed bed which contains catalytically active substances and with these fixed bed partial spaces being bounded by walls (22) which are permeable for the fluids (3, 4).

3. Reactive distillation in accordance with claim 2, **characterised in that** zones (6, 7) of a first and of a second kind are arranged in the column (1) in an alternating succession in the direction of the column axis, with packing structures (5) in which merely a material exchange between the two fluids takes place being contained in the zones of the first kind, whereas packing structures (5') in which the reactive distillation is carried out are contained in the zones of the second kind.

4. Reactive distillation in accordance with claim 2 or claim 3, **characterised in that** the packing (2) or the packing structures (5') which are provided for carrying out the reactive distillation are built up of layers which are oriented in the direction of the column axis; and **in that** adjacent layers in each case form passage-like cavities which cross one another and are open with respect to one another.

5. Reactive distillation in accordance with claim 4, **characterised in that** the layers are in each case formed by a plurality of packing parts (23) containing catalytically active substances which are laid into a carrier structure (5); and **in that** the packing parts are substantially cylindrical.

6. Reactive distillation in accordance with claim 4, **characterised in that** the layers are in each case formed by cushion-like packing parts (23) which comprise two fluid-permeable walls; and **in that** the inner spaces of the packing parts are formed by parallel passages containing catalytically active substances (200) which are present in the form of a relief-like profiling of the walls (25), with these passages crossing one another, being open with respect to one another and being closed off at the edge of the packing part.

7. Use of the reactive distillation in accordance with one of the claims 1 to 6 for the manufacture or for the decomposition of esters, ethers or alcohols.

8. Use of the reactive distillation in accordance with one of the claims 1 to 6 for the selective hydration of olefins or aromatic compounds.

9. Use of the reactive distillation in accordance with one of the claims 1 to 6 for carrying out isomerisations.

## Revendications

1. Distillation réactive dans une colonne (1) avec une garniture (2) réalisée au moins partiellement comme support de catalyseur (23), où on comprend par distillation réactive un procédé, où les réactions catalytiques sont exécutées sous distillation simultanée, la garniture comprend une pluralité d'espaces partiels contenant des matières solides et des espaces creux entre les espaces partiels, les espaces creux et les espaces partiels s'étendent sensiblement le long d'un axe de colonne ou selon des angles à celui-ci, les espaces partiels cités sont formés chacun par un lit fixe qui contient des matières catalytiquement actives, où en outre deux phases, à savoir des fluides (3, 4) de densités différentes, s'écoulent à travers la garniture, le premier fluide plus dense s'écoule dans les espaces partiels du lit fixe avec un flux volumique V₁ (300), le soi-disant flux volumique interne, le second fluide moins dense, s'écoule en contre-courant à travers les espaces creux, et où ont lieu, d'une part, des réactions catalytiques dans le lit fixe et, d'autre part, un échange de matière entre les deux fluides, **caractérisée en ce que** pour le flux volumique VI du fluide plus dense (3) une valeur est réglée qui se situe dans un intervalle (I) autour d'une valeur excellente a, **en ce que** la valeur a est associée à une fonction du flux volumique V_{I} et que cette fonction représente une répartition de temps de séjour (32) du fluide plus dense, **en ce que** la variance s de la répartition du temps de séjour est une seconde fonction du flux volumique V_{I} sous la forme d'une courbe déterminée par expériment, **en ce que** cette fonction s(V_{I}) prend pour V_{I} = a un minimum et **en ce que** aux limites de l'intervalle indiqué, le flux volumique V_{I} se distingue de la valeur a d'au plus de 30%, de préférence de 10%.

2. Distillation réactive selon la revendication 1, **caractérisée en ce que** la colonne (1) comporte une garniture (2) qui contient une pluralité d'espaces partiels (23) contenant des matières solides et des espaces creux (24) entre les espaces partiels indiqués, où les espaces creux s'étendent sensiblement le long d'un axe de colonne ou selon des angles relativement à celui-ci, les espaces partiels indiqués sont formés chacun par un lit fixe qui contient des matières catalytiquement actives, et ces espaces partiels de lit fixe sont délimités par des parois (22) qui sont perméables aux fluides (3, 4).

3. Distillation réactive selon la revendication 2, **caractérisée en ce que** sont disposées dans la colonne (1) des zones (6, 7) d'un premier et d'un second type selon une suite alternante dans la direction de l'axe de la colonne, où se trouvent dans les zones du premier type des structures de garniture (5) dans lesquelles a lieu seulement un échange de matière entre les deux fluides tandis que dans les zones du second type se trouvent des structures de garniture (5') dans lesquelles est exécutée la distillation réactive.

4. Distillation réactive selon la revendication 2 ou 3, **caractérisée en ce que** la garniture (2) ou les structures de garniture (5') prévues pour exécuter la distillation réactive sont constituées de couches qui sont orientées dans la direction de l'axe de la colonne, et **en ce que** des couches avoisinantes forment respectivement des espaces creux semblables à des canaux qui se croisent et qui sont ouverts les uns vers les autres.

5. Distillation réactive selon la revendication 4, **caractérisée en ce que** les couches sont formées par une pluralité de parties de garniture (23) contenant des matières catalytiquement actives qui sont placées dans une structure de support, et **en ce que** les parties de garniture sont sensiblement cylindriques.

6. Distillation réactive selon la revendication 4, **caractérisée en ce que** les couches sont formées respectivement par des parties de garniture (23) en forme de coussin, comprenant deux parois perméables au fluide, et **en ce que** les espaces intérieurs des parties de garniture sont formés par des canaux parallèles, contenant des matières catalytiquement actives (200) qui se présentent sous la forme d'un profilage semblable à un relief des parois (25) où ces canaux se croisent, sont ouverts les uns vers les autres et sont fermés au bord de la partie de garniture.

7. Utilisation de la distillation réactive selon l'une des revendications 1 à 6 pour la réalisation ou la dissociation d'esters, d'éthers ou d'alcools.

8. Utilisation de la distillation réactive selon l'une des revendications 1 à 6 pour l'hydrogénation sélective d'oléfines ou d'aromates.

9. Utilisation de la distillation réactive selon l'une des revendications 1 à 6 pour exécuter des isomérisations.
